(19) Europäisches Patentamt
European Patent Office
Office européen des brevets

(11) **EP 4 283 708 B1**

(12) **EUROPEAN PATENT SPECIFICATION**

(45) Date of publication and mention
of the grant of the patent:
**24.09.2025 Bulletin 2025/39**

(21) Application number: **23165323.9**

(22) Date of filing: **30.03.2023**

(51) International Patent Classification (IPC):
*H01M 4/133* (2010.01)     *H01M 4/136* (2010.01)
*H01M 4/1393* (2010.01)     *H01M 4/1397* (2010.01)
*H01M 4/36* (2006.01)     *H01M 4/58* (2010.01)

(52) Cooperative Patent Classification (CPC):
**H01M 4/133; H01M 4/136; H01M 4/1393;
H01M 4/1397; H01M 4/366; H01M 4/58;
Y02E 60/10**

(54) **SILICA COATED SULFUR-CARBON COMPOSITE AND LITHIUM-SULFUR BATTERY COMPRISING THE SAME**

SILIZIUMDIOXIDBESCHICHTETER SCHWEFEL-KOHLENSTOFF-VERBUNDSTOFF UND LITHIUM-SCHWEFEL-BATTERIE DAMIT

COMPOSITE SOUFRE-CARBONE REVÊTU DE SILICE ET BATTERIE LITHIUM-SOUFRE LE COMPRENANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.05.2022 KR 20220065671
19.10.2022 KR 20220135073**

(43) Date of publication of application:
**29.11.2023 Bulletin 2023/48**

(73) Proprietor: **LG Energy Solution, Ltd.
Seoul 07335 (KR)**

(72) Inventors:
• **LEE, Mi-Jin**
**34122 Daejeon (KR)**
• **KIM, Min-Su**
**34122 Daejeon (KR)**
• **SOHN, Kwon-Nam**
**34122 Daejeon (KR)**
• **HAN, Dong-Hyeop**
**34122 Daejeon (KR)**
• **HONG, Kyung-Sik**
**34122 Daejeon (KR)**
• **SHIN, Dong-Seok**
**34122 Daejeon (KR)**

(74) Representative: **Goddar, Heinz J.
Boehmert & Boehmert
Anwaltspartnerschaft mbB
Pettenkoferstrasse 22
80336 München (DE)**

(56) References cited:
**CN-A- 105 552 345     CN-A- 107 768 617**

**Description**

<u>TECHNICAL FIELD</u>

The present invention relates to a silica coated sulfur-carbon composite and a lithium-sulfur battery comprising the same.

<u>BACKGROUND</u>

Secondary batteries are used as high-capacity energy storage batteries and high-performance energy sources for portable electronic devices including mobile phones, camcorders and laptops.

A type of secondary battery, a lithium-ion secondary battery, has higher energy density and larger capacity per area than a nickel-manganese battery or a nickel-cadmium battery, but despite these advantages, it has disadvantages such as stability reduction caused by overheating and low output characteristics.

In particular, as the application of secondary batteries has been expanded to electric vehicles (EVs) and energy storage systems (ESSs), attention is directed to lithium-sulfur battery technology due to its high theoretical energy storage density by weight (~2,600 Wh/kg) compared to lithium-ion secondary batteries with lower energy storage density by weight (~250 Wh/kg).

A lithium-sulfur battery refers to a battery system comprising a sulfur-containing material having a sulfur-sulfur (S-S) bond for a positive electrode active material and lithium metal for a negative electrode active material. Sulfur, the main component of the positive electrode active material, is plentiful and can be found all over the world. Furthermore, sulfur is nontoxic, and has low atomic weight.

Sulfur used in the lithium-sulfur battery has electrical conductivity of 5 x 10$^{-30}$ S/cm, and thus it is a nonconductor which is not electrically conductive. Thus, electrons generated by electrochemical reactions cannot move in sulfur. Attempts have been made to combine the sulfur-containing material with a conductive material such as carbon capable of providing electrochemical reaction sites to form a sulfur-carbon composite for the use as a positive electrode active material.

However, despite the above-described advantages, when a sulfur-containing material is used as an active material, the amount of sulfur that participates in the electrochemical oxidation-reduction reactions in the battery is low based on the total amount of sulfur used as the raw material, so that the actual battery capacity is lower than the theoretical capacity.

Hence, the full potential of a lithium-sulfur battery containing a sulfur-containing material cannot be fully unleashed considering that the theoretical capacity cannot be fully used in practice so far.

This problem may be caused by various factors, and for example, sulfur-agglomerates are formed by the non-uniform feeding of sulfur in the sulfur-carbon composite, or sulfur is not uniformly fed by the agglomeration of the sulfur-carbon composite itself in the electrode fabrication.

For example, when manufacturing the lithium-sulfur battery using dry electrodes, in the process of uniformly feeding the sulfur-carbon composite in powder state, spreading thin and flattening using a blade to fabricate the electrode, in case that the flowability of the sulfur-carbon composite is low, non-uniform feeding of sulfur leads to large variations of electrode loading, causing defects in the electrode.

Thus, it is desired that when manufacturing dry electrodes for a lithium-sulfur battery, that a sulfur-carbon composite can be highly uniformly spread and flattened for the fabrication of an electrode, for example by the use of a blade, so that a uniform electrode loading and minimizing electrode defects can be achieved. For this aim, it is required that the formation of agglomerates of the sulfur-carbon composite can be reduced.

CN 107768617 A discloses a lithium-sulfur battery composite positive electrode material and a preparation method thereof, especially discloses a polymer layer-coated sulfur carbon composite material with a core-shell structure and a preparation method of the sulfur carbon composite material. The composite is arranged outside a core of the sulfur carbon compound, and a shell of a conductive polymer film layer wraps the composite material. The preparation method comprises the steps of firstly, preparing sulfur carbon (SC) compound by a molten salt method, and achieving ideal grain (6-10 micrometers) by low-temperature ball-milling and smashing; secondly, preparing a silicon dioxide-coated sulfur carbon (SiO$_2$SC) compound by a traditional Stobe method after process optimization; thirdly, completing preparation of the conductive polymer-coated SiO$_2$SC compound by low-temperature chemical vapor deposition; and finally, preparing the polymer-coated sulfur carbon composite material with the core-shell structure by etching and by an activation method.

<u>DISCLOSURE</u>

## Technical Problem

The present invention is directed to solve the problems stated in the state of the prior art.

Additionally, it is a problem to be solved to provide lithium-sulfur batteries with improved performance and uniform quality. Furthermore, it is a problem to be solved to provide an electrode with improved performance, uniform quality and less defects so that the production yield can be increased. Thereby, it is a problem to be solved to provide an electrode, for example a positive electrode, that can be more efficiently produced and which can be uniformly loaded so that electrode defects can be minimized. Accordingly, for the practical use of lithium-sulfur batteries having good characteristics as described above, it may be necessary to improve the flowability of the sulfur-carbon composite to solve the above problems.

## Technical solution of the present invention

The above problems are solved in accordance with the subject-matter of the independent claims. Further embodiments result from the sub-claims and the following detailed description.

The present invention solves the problem of the prior art by providing a silica coated sulfur-carbon composite, a method to provide a silica coated sulfur-carbon composite, an electrode containing a silica coated sulfur-carbon composite, and a lithium-sulfur battery containing that electrode.

One aspect of the present invention is a silica coated sulfur-carbon composite, comprising:

a sulfur-carbon composite; and
silica particles coated on at least part of a surface of the sulfur-carbon composite;
wherein the weight ratio of sulfur-carbon composite to silica particles is between 99.9:0.1 and 80:20;
the sulfur-carbon composite contains an outer surface and a specific surface,
wherein between 60% and 100% of the outer surface of the sulfur-carbon composite is coated with silica particles; and
the silica coated sulfur-carbon composite has features of the following Formula 2:

[Formula 2]

$$0.0001 \leq \frac{[Mp/(Mp+Mc)]}{[So/St]} \leq 0.2$$

where Mp is a mass of the silica particles,
Mc is a mass of the sulfur-carbon composite,
So is a coating area of the silica particles, and
St is a surface area of the silica coated sulfur-carbon composite.

Another aspect of the present invention is a method for the preparation of a silica coated sulfur-carbon composite as described above comprising the steps of

a) providing a sulfur-carbon composite and silica particles

b) mixing the sulfur-carbon composite and the silica particles to coat the sulfur-carbon composite with the silica particles as solids in a powder mixing apparatus,

c) isolating the silica coated sulfur-carbon composite.

Therefore, the present invention is directed to providing a silica coated sulfur-carbon composite with improved flowability and a method for manufacturing the same.

As a consequence of improving the flowability of the silica sulfur-carbon composite, agglomerations of the silica coated sulfur-carbon composite can be reduced. As a result, electrodes and lithium-sulfur batteries with more uniform quality and improved performance can be provided. Furthermore, an electrode, like a positive electrode, may be produced more efficiently due to the improved flowability of the silica coated sulfur-carbon composite. Consequently, also a lithium-sulfur battery may be produced more efficiently.

In other words, it has been surprisingly found that a silica coated sulfur-carbon composite may have improved flowability. The improved flowability has been found to go surprisingly along with minimizing the formation of agglomerations. Hence, electrodes, like positive electrodes, with minimized formation of agglomerates may be provided. The reduction of sulfur-carbon composite by the use of silica coated sulfur-carbon composites as presented by the present invention may have the surprising effect that the performance and the capacity of a lithium-sulfur battery is surprisingly improved.

An additional aspect of the present invention is an electrode containing the silica coated sulfur-carbon composite.

The electrode may be produced more efficiently due to the improved flowability of the silica coated sulfur-carbon composite. In addition, the electrode may be produced with minimized defects by obtaining more uniform electrodes. As a consequence, the yield of the production of the electrode may be surprisingly improved by the use of a silica coated sulfur-carbon composite.

Yet another aspect of the present invention is a lithium-sulfur battery as described above, comprising:

a positive electrode comprising the silica coated sulfur-carbon composite;
a negative electrode comprising a negative electrode active material; and
an electrolyte solution.

It has been surprisingly found that a lithium-sulfur battery comprising a silica coated sulfur-carbon composite of the present invention may have an improved performance. Furthermore, surprisingly, the lithium-sulfur battery of the present invention may have an improved capacity. In addition, the lithium-sulfur battery of the present invention may have a longer lifetime. These surprising effects may correspond to the uniform loading of the electrode, like the positive electrode, with the silica coated sulfur-carbon composite of the present invention.

An aspect of the present invention is the use of a silica coated sulfur-carbon composite for the preparation of a positive electrode of a lithium-sulfur battery.

It has been surprisingly found that a silica coated sulfur-carbon composite has a higher flowability so that when used for the preparation of a positive electrode of a lithium-sulfur battery the production of the positive electrode can be surprisingly improved, since more positive electrodes can be produced per time unit. Furthermore, it has been surprisingly found that when a silica coated sulfur-carbon composite is used for the preparation of a positive electrode of the lithium-sulfur battery, the obtained positive electrodes contain a reduced number of agglomerates and are more uniform when compared to each other, so that surprisingly the production yield can be improved. Hence, the user of a silica coated sulfur-carbon composite may have an economic benefit in using a silica coated sulfur-carbon composite for the preparation of a positive electrode, and also of a lithium-sulfur battery, as it is presented in the present invention.

Hence, the present invention is designed to solve the above-described problems, and therefore, the present invention is directed to providing a silica coated sulfur-carbon composite with improved flowability and a method for manufacturing the same.

According to an aspect, the present disclosure is directed to providing a silica coated sulfur-carbon composite with reduced agglomeration of the sulfur-carbon composite, and a method for manufacturing the same.

According to another aspect, the present invention is directed to providing a method for improving the flowability of a silica coated sulfur-carbon composite by improving the surface roughness of the sulfur-carbon composite.

## Advantageous Effects

Coating a sulfur-carbon composite with silica has the surprising technical effect that the flowability is improved. Improving the flowability of a sulfur-carbon composite which may be used as an electrode in a lithium-sulfur battery, has the surprising technical effect that an electrode, and thus also a lithium-sulfur battery may be produced more efficiently. Furthermore, the improved flowability of a silica coated sulfur-carbon composite may have the surprising effect that an electrode and a lithium-sulfur battery may be provided with a more uniform quality and improved performance.

Accordingly, the silica coated sulfur-carbon composite according to an embodiment of the present invention has the improved flowability on surface. Accordingly, the silica coated sulfur-carbon composite is uniformly coated on the electrode support, thereby improving the performance of the battery.

Specifically, when compared with the conventional sulfur-carbon composite having high surface roughness, the silica coated sulfur-carbon composite according to an embodiment of the present disclosure includes silica particles coated on at least part of the surface of the sulfur-carbon composite, so the silica particles are inserted into the surface of the sulfur-carbon composite having high surface roughness, thereby reducing the surface roughness of the sulfur-carbon composite and providing good particle flowability to the sulfur-carbon composite. Accordingly, the silica coated sulfur-carbon composite according to an embodiment of the present disclosure is uniformly coated on the electrode support, thereby manufacturing the electrode with uniform loading.

## Description of the Figures

The accompanying drawings illustrate an exemplary embodiment of the present invention, and together with the foregoing disclosure, serve to provide further understanding of the technical features of the present invention, and thus the present disclosure is not construed as being limited to the drawings.

FIG. 1 shows photographs of scanning electron microscopy (SEM) images of sulfur-carbon composite according to Comparative Example 1 (left column) and silica coated sulfur-carbon composite according to Example 1 (center column) and Example 2 (right column) of the present invention. The upper row SEM images have a 15 000 times magnification, and the lower row SEM images have a 2000 times magnification.

FIG. 2 shows photographs of the results of measuring the angle of repose of sulfur-carbon composite according to Comparative Example 1 (left) and silica coated sulfur-carbon composite according to Example 1 (center) and 2 (right) of the present invention.

FIG. 3 shows photographs showing the flowability of sulfur-carbon composite according to Comparative Example 1 (left) and silica coated sulfur-carbon composite according to Example 1 (center) and Example 2 (right) of the present invention.

FIG. 4 shows photographs of SEM images of sulfur-carbon composite according to Comparative Example 2 (left column) and zinc oxide (ZnO) coated sulfur-carbon composite according to Comparative Examples 3 (center column) and 4 (right column). The upper row SEM images have a 10 000 times magnification, and the lower row SEM images have a 2000 times magnification.

FIG. 5 shows photographs of the results of measuring the angle of repose of sulfur-carbon composite according to Comparative Example 2 (left) and zinc oxide (ZnO) coated sulfur-carbon composite according to Comparative Example 3 (center) and 4 (right).

## Detailed Description

Hereinafter, the present invention is described in detail. However, the present invention is not limited to the following description, and each element may be variously adapted or modified or selectively interchangeably used, if necessary. Accordingly, it should be understood that the present invention covers all modifications, equivalents or alternatives included in the technical features and aspects of the present invention.

In the present specification, the term "including" specifies the presence of stated elements, but does not preclude the presence or addition of one or more other elements unless expressly stated otherwise.

In the present specification, the term "comprising" specifies the presence of stated elements, but does not preclude the presence or addition of one or more other elements unless expressly stated otherwise.

In the present specification, the term "consisting of" specifies the presence of the stated elements only. The term "comprise" may encompass "consisting of" if not mentioned else explicitly.

In the present specification, "A and/or B" refers to either A or B or both A and B.

In the present disclosure, the term composite refers to a material which is produced by combining at least two materials to form a physically and chemically different phase and exhibit a more effective function.

### The silica coated composite

One aspect of the present invention is a silica coated sulfur-carbon composite, comprising:

a sulfur-carbon composite; and
silica particles coated on at least part of a surface of the sulfur-carbon composite
wherein the weight ratio of sulfur-carbon composite to silica particles is between 99.9:0.1 and 80:20;
the sulfur-carbon composite contains an outer surface and a specific surface,
wherein between 60% and 100% of the outer surface of the sulfur-carbon composite is coated with silica particles; and
the silica coated sulfur-carbon composite has features of the following Formula 2:

[Formula 2]

$$0.0001 \le \frac{[Mp/(Mp + Mc)]}{[So/St]} \le 0.2$$

where Mp is a mass of the silica particles,
Mc is a mass of the sulfur-carbon composite,
So is a coating area of the silica particles, and
St is a surface area of the silica coated sulfur-carbon composite.

A silica coated sulfur-carbon composite may be used as a carrier for supporting a positive electrode active material in a positive electrode of a lithium-sulfur battery, a positive electrode active material itself or a conductive material. However, the use of the silica coated sulfur-carbon composite according to an aspect of the present disclosure may not be limited thereto. The silica coated sulfur-carbon composite may comprise a sulfur-carbon composite and silica particles coated on at least part of the surface of the sulfur-carbon composite.

In other words, the silica coated sulfur-carbon composite may comprise a sulfur-carbon composite having an outer surface on which silica particles are at least partly coated, preferably in which the outer surface is fully coated with silica particles.

After coating a sulfur-carbon composite with silica particles, the silica particles themselves may not be distinguishable as particles anymore, but may form a coating layer on the surface of the sulfur-carbon composite. Hence, the particle size of a sulfur-carbon composite, and also of a carbon composite, may be bigger than the particle size of a silica particle. The particle size may correspond to the average particle size ($D_{50}$) according to ISO 13320:2020 as it is known by the person skilled in the art. However, the method for measuring the particle size is not limited thereto.

Accordingly, the sulfur-carbon composite coated with silica particles on at least part of the surface may have the reduced roughness and improved flowability due to the inserted silica particles, but the mechanism of the present disclosure is not limited thereto.

The flowability may be determined by the angle of repose as described below. The roughness of the silica coated sulfur-carbon composite may be measured according to ISO-25718:2016 as it is known by the person skilled in the art. However, the measurement of the roughness may not be limited thereto.

The coating thickness of the silica particles on at least part of the surface of the silica coated sulfur-carbon composite may be, for example, 20 nm to 5 $\mu$m, preferably 40 nm to 5 $\mu$m, more preferably 40 nm to 1 $\mu$m. When the coating thickness of the silica particles is in the above-described range, it is possible to achieve the low density of the silica coated sulfur-carbon composite and improving the flowability, but the present invention is not limited thereto. In other words, the silica coated sulfur-carbon composite may have an optimal balance between good flowability and low density when the coating thickness is within the above range. The coating thickness of silica particles may be determined through scanning electron microscopy (SEM), but the measurement method is not limited thereto.

Preferably, the ratio of the average particle size diameter ($D_{50}$) of the silica coated sulfur-carbon composite to the maximum thickness of the coating layer may be between 100:1 to 1000:1. A silica coated sulfur-carbon composite fulfilling this ratio may have an optimal balance between good flowability and low density. The average particle size diameter of the silica coated sulfur-carbon composite may be measured as it is described above, and the thickness of the coating layer may be measured as it is described above. The ratio may be a dimensionless value.

The sulfur-carbon composite contains an outer surface and a specific surface, wherein between 60% and 100% of the outer surface of the sulfur-carbon composite is coated with silica particles determined by SEM analysis in which the surface of the silica coated sulfur-carbon composite is magnified by 15,000 times and a surface area of 10 $\mu$m x 10 $\mu$m is analyzed. The specific surface may be similar to the inner surface. The specific surface may be determined by BET according to ISO 9277:2010 as it is known by the person skilled in the art. However, the method for the measurement of the specific surface may not be limited thereto.

In one embodiment, between 65% and 100%, preferably between 70% and 100%, like preferably 75% and 100%, more preferably 80% and 100%, like preferably 85% and 100%, even more preferably 0% and 100%, especially more preferably 95% and 100%, like especially mor preferably 95% and 99% of the outer surface of the sulfur-carbon composite can be coated with silica particles.

In one embodiment, the coating thickness of the silica particles in the silica coated sulfur-carbon composite may be estimated from a correlation between a ratio of the weight of the silica particles to the total weight of the silica coated sulfur-carbon composite and a ratio of the coating area of the silica particles to the total surface area of the silica coated sulfur-carbon composite.

The silica coated sulfur-carbon composite has features of the following Formula 2.

[Formula 2]

$$0.001 \leq \frac{[Mp/(Mp + Mc)]}{[So/St)]} \leq 0.2$$

wherein Mp is the mass of the silica particles,

Mc is the mass of the sulfur-carbon composite,

So is the coating area of the silica particles, and

St is the surface area of the silica coated sulfur-carbon composite.

In the specification, the "coating area of the silica particles" may be measured by a method for measuring the coating area of the silica particles on the surface of the sulfur-carbon composite, and for example, may be measured using scanning electron microscopy (SEM).

In the specification, the "surface area of the silica coated sulfur-carbon composite" may be, for example, a specific surface area value measured by the BET method. For example, the surface area of the silica coated sulfur-carbon composite may be a value calculated from the volume of adsorbed nitrogen gas using BEL Japan BELSORP-mini II under the liquid nitrogen temperature (77K). For determining the specific surface area value ISO 9277:2010, which uses the BET method as it is known by the person skilled in the art, may be applied. But the measurement of the specific surface area is not limited thereto.

Preferably, the silica coated sulfur-carbon composite may comprise 0.01 to 20 wt.%, preferably 0.01 to 10 wt.%, more preferably 1 to 10 wt.%, even more preferably 1 to 5 wt.%, most preferably 1 to 3 wt.% silica particles, with respect to the total weight of the silica coated sulfur-carbon composite, respectively. Preferably, the silica coated sulfur-carbon composite may comprise 99.99 to 80 wt.%, preferably 99.99 to 9o wt.%, more preferably 99 to 90 wt.%, even more preferably 99 to 95 wt.%,most preferably 99 to 97 wt.%, sulfur-carbon composite, with respect to the total weight of the silica coated sulfur-carbon composite, respectively.

A silica coated sulfur-carbon composite which fulfills the above requirements, may have improved flowability balanced with improved density. Furthermore, an electrode and particularly a lithium-sulfur battery may be provided with improved performance, capacity and/or long lifetime.

Preferably, the silica coated sulfur-carbon composite comprises the sulfur-carbon composite and the silica particles at a weight ratio of 99.9:0.1 to 80:20. In other words, the weight ratio of sulfur-carbon composite to silica particles is between 99.9:0.1 and 80:20. For example, the weight ratio of the sulfur-carbon composite and the silica particles may be 99.9:0.1 to 90:10 or 99:1 to 90:10, or 99:1 to 95:5, or 97:3 to 90:10, or 99:1 to 97:3. Consequently in other words, the weight ratio of the sulfur-carbon composite and the silica particles may be preferably 99.9:0.1 to 90:10, more preferably 99:1 to 90:10, even more preferably 99:1 to 95:5. In another preferred embodiment may have a weight ratio of the sulfur-carbon composite and the silica particles of 97:3 to 90:10. A specifically preferred embodiment may have a weight ratio of the sulfur-carbon composite and the silica particles of 99:1 to 97:3. When the weight ratio of the sulfur-carbon composite and the silica particles is in the above-described range, it is possible to achieve the low density of the silica coated sulfur-carbon composite and improve the flowability, but the present invention is not limited thereto.

Preferably, the silica coated sulfur-carbon composite has technical significance in that the silica particles coated on (inserted into) the surface of the sulfur-carbon composite commonly used in positive electrodes of lithium-sulfur batteries to reduce the roughness. Accordingly, the sulfur-carbon composite may not be limited to a particular type and shape. The roughness may be measured as it is described above.

Preferably, the average particle size $D_{50}$ of the sulfur-carbon composite may be 20 $\mu$m to 50 $\mu$m, but the present invention is not limited thereto. For the method for measuring the average particle size $D_{50}$. In the present specification, the average particle size $D_{50}$ refers to the particle size at 50% of the cumulative particle size distribution. The particle size may be, for example, a value obtained by measuring the silica coated sulfur-carbon composite coated with silica particles through a particle size analyzer (PSA). A particle size analyzer for determining the average particle size $D_{50}$ may be used according to ISO 13320:2020 as it is known by the person skilled in the art. However, the method for measuring the particle size is not limited thereto.

The sulfur-containing compound may be on at least part of the inner surface of pores of the porous carbon material. The inner surface of pores in a porous carbon material may be the specific surface of a porous carbon material. The sulfur-containing compound may be on at least part of the outer surface of pores of the porous carbon material. The inner surface of the pores in a porous carbon material may be the same as the specific surface of a porous carbon material.

Preferably, the sulfur-carbon composite may refer to a composite comprising a sulfur-containing compound supported on at least part of inner and outer surfaces of pores in a porous carbon material.

Preferably, the porous carbon material may provide the skeleton for uniformly and stably fixing the sulfur-containing compound, which is a positive electrode active material, and supplements the electrical conductivity of the sulfur-containing compound for smooth electrochemical reactions. Hence, the sulfur-containing compound may be in direct contact with the surface of the porous carbon material, like the inner surface of pores of the porous carbon material, i.e. the specific surface of the porous carbon material, and/ or the outer surface of pores of the porous carbon material. The sulfur-containing compound being in direct contact with the porous carbon material may have the technical effect that an electrochemical reaction may occur, which may be relevant for the proper use of a silica coated sulfur-carbon compound as an electrode, for example a positive electrode, and for the use in a lithium-sulfur battery.

Preferably, the sulfur-carbon composite comprises the sulfur-carbon composite comprising a porous carbon material; and a sulfur-containing compound.

In a special embodiment, the sulfur-carbon composite comprises a porous carbon material; and a sulfur-containing compound supported on at least part of inner and outer surfaces of pores in the porous carbon material, wherein the ratio of the porous carbon material and silica may be between 35:1 and 2:1, preferably from 30:1 to 2.5:1.

As outlined above, the porous carbon material may provide a skeleton for uniformly and stably fixing the sulfur-containing compound. When the silica coated sulfur-carbon composite may be used in an electrode, like a positive electrode, and/or a lithium-sulfur battery, the amount of the sulfur-containing compound may vary depending on the charge or discharge of the battery and the age of the battery. Nevertheless, the silica coated sulfur-carbon composite of the present invention may provide an electrode with minimized defects and improved uniformity, so that a silica coated sulfur-carbon composite of the present invention may have a stable ratio of the porous carbon material and silica which is in the above range independent of the usage of the silica coated sulfur-carbon material. A silica coated sulfur-carbon composite fulfilling the above ratio may provide a skeleton in which the porous carbon material and the silica are uniformly distributed in an electrode, like a positive electrode, and may provide a lithium-sulfur battery with improved performance, capacity and/ or lifetime.

Additionally, the concentration of silica may be higher at the outer surface compared to the specific surface of the porous carbon material.

The inner surface of the pore of the porous carbon material may be mostly filled with a sulfur -containing compound. Consequently, the concentration of silica that may enter the specific surface (inner surface of the pore) of the porous carbon material may be lower compared to the concentration of silica at the outer surface of the silica coated sulfur-carbon composite. It may be advantageous, if the silica particles mostly, preferably only, coat the outer surface of a silica coated sulfur-carbon composite. As a consequence, the silica coated sulfur-carbon composite may have a good balance between high flowability and density. The concentration of silica particles may be determined by the weight of silica particles divided by the respective surface. Thus, the concentration of the silica particles in the inner surface of the pore of the porous carbon material may be determined by the weight amount of silica particles divided by the specific surface of the porous carbon material. The concentration of the silica particles in the outer surface of the porous carbon material may be determined by the weight amount of silica particles divided by the outer surface of the porous carbon material. In one embodiment, the surface of the porous carbon material of a silica coated sulfur-carbon composite may be estimated by subtracting the amount of a sulfur-containing compound in the silica coated sulfur-carbon composite. The specific surface may be determined by BET according to ISO 9277:2010 as it is known by the person skilled in the art. However, the method for the measurement of the specific surface may not be limited thereto.

### *Angle of Repose*

Preferably, the silica coated sulfur-carbon composite may have a lower angle of repose by the improved flowability compared to the sulfur-carbon composite that is not coated with silica particles.

Preferably, the value for the angle of repose of the silica coated sulfur-carbon composite may be lower by 5% or more than the sulfur-carbon composite before being coated with silica particle. Hence, a sulfur-carbon composite which may not contain any silica particle coating.

More specifically, the angle of repose of the silica coated sulfur-carbon composite may be lower by 6% or more, 6.5% or more, 7% or more, 8% or more, 9% or more, 10% or more, 15% or more, 20% or more, 25% or more or 30% or more than the sulfur-carbon composite before silica particles coating. A lower angle of repose may reflect the improved flowability of the silica coated sulfur-carbon composite. In one embodiment the angle of repose may be dependent on the specific sulfur-carbon composite used.

In the specification, the reduction in the angle of repose may be calculated according to the following Formula 3.

[Formula 3]

$$\text{Change in angle of repose (\%)} = [(Ra-Rb)/Rb] \times 100$$

Rb is the angle of repose of the sulfur-carbon composite before coating, and

Ra is the angle of repose of the silica coated sulfur-carbon composite.

The angle of repose of the silica coated sulfur-carbon composite may be equal to or less than 32° by the improved flowability. In other words, the angle of repose ($\theta$) of the silica coated sulfur-carbon composite may be 32.0° or less according to <1174>, "Powder Flow" in US Pharmacopeia 36.

In the present specification, the "angle of repose" may indicate a value measured by the method commonly used to measure the angle of repose of a sample, and the method for measuring the angle of repose may be, for example, the Angle of Repose Method described in US Pharmacopoeia 1174 and EP Pharmacopoeia 2.9.76. In an embodiment of the present invention, the angle of repose may be measured, for example, by the following method. First, the funnel is placed at the height of 7.5 cm from the ground, and fixed with the center aligned using a horizontal leveler, and the lower portion of the funnel is closed to prevent the fed sample from sliding down. 100 g of the sample to be measured is poured into the funnel, and the lower portion of the funnel is opened to cause the sample to fall freely to form a pile on a disk (diameter 13 cm) on the base. Subsequently, the angle of repose ($\theta$) of the sample pile is measured.

The angle of repose may be, for example, 5° to 32°, 5° to 31.5°, 5° to 31°, 10° to 31°, 5° to 30.5°, 5° to 30°, 10° to 30°, 15° to 28°, 15.5° to 27°, 20° to 26.5°, or 23° to 26°, or 5° to 30.3°, or 5° to 25.5°, or 5° to 23°, or 23° to 30.3°, or 23° to 25.5°, or 25.5° to 30.3°.

Preferably, the silica coated sulfur-carbon composite may fulfill the following formula 4:

$$-3.16\ln(N_{1Y} + 0.2) + 31 > \theta > -3.16\ln(N_{1Y} + 0.2) + 25$$

$$N_{1Y} = \frac{Mp}{Mp+Mc} * 100,$$

Mp = mass of silica particles
Mc = mass of sulfur-carbon composite
$\theta$ = angle of repose in degree of the silica coated sulfur-carbon composite determined according to <1174>, "Powder Flow" in US Pharmacopeia 36.

Thus, the angle of repose ($\theta$) may depend on the amount of silica particles used for a certain amount of sulfur-carbon composite for obtaining a silica coated sulfur-carbon composite. A silica coated sulfur-carbon composite which fulfills the above formula 4 may have the ideal balance between good flowability and low density of the silica coated sulfur-carbon composite. Furthermore, a silica coated sulfur-carbon composite which fulfills the above formula 4 may also provide an ideal balance between good flowability of the silica coated sulfur-carbon composite and high-capacity and/or performance of an electrode, like a positive electrode, and/ or a lithium-sulfur battery. Thus, it may be beneficial for the user of a silica coated sulfur-carbon composite to have a minimum amount of silica particles that is good enough for improving the flowability, but that is not too high so that the capacity and/ or performance of an electrode, like a positive electrode, and/ or a lithium-sulfur battery may be notably affected.

Preferably, the silica coated sulfur-carbon composite may fulfill the following formula 5A:

$$N_{1Y} < 7.4\ln(S_{spec}) - 40$$

wherein,

$$N_{1Y} = \frac{Mp}{Mp+Mc} * 100,$$

Mp = mass of silica particles
Mc = mass of sulfur-carbon composite

$S_{spec}$ = specific surface area of the porous carbon material.

Thus, the weight amount of silica particles based on the sulfur-carbon composite may depend on the specific surface area of the porous carbon material. A larger specific surface area of the porous carbon material may correspond to a larger outer surface area of the porous carbon material and thus also of the resulting sulfur-carbon composite. The coating of a larger outer surface area of a sulfur-carbon composite may make it necessary that a larger amount of silica particles is used. Consequently, a larger specific surface area of the porous carbon material may make the use of more silica particles necessary, compared to a porous carbon material with a smaller specific surface area of the porous carbon material. Hence, a silica coated sulfur-carbon composite which may fulfill the above formula 5A, may have the ideal balance between flowability and density of the silica coated sulfur-carbon composite. The specific surface area of the porous carbon material may be determined by BET according to ISO 9277:2010 as it is known by the skilled person in the art, in which mostly none, preferably none, of the sulfur-containing compound is remained in the silica coated sulfur-carbon composite, when measured. Thus, most preferably the specific surface area of the porous carbon material in the silica coated sulfur-carbon composite may be highly similar, preferably about the same, as the corresponding porous carbon material which may not have been used for the formation of a sulfur-carbon composite and/ or a silica coated sulfur-carbon composite.

More preferably, the silica coated sulfur-carbon composite may fulfill the following formula 5B,

$$6.5\ln\left(S_{spec}\right) - 41 < N_{1Y} < 7.3\ln\left(S_{spec}\right) - 40,$$

wherein

$$N_{1Y} = \frac{Mp}{Mp+Mc} * 100,$$

Mp = mass of silica particles
Mc = mass of sulfur-carbon composite
$S_{spec}$ = specific surface area of the porous carbon material.

Thus, the weight amount of silica particles based on the sulfur-carbon composite may depend on the specific surface area of the porous carbon material. Thereby, the amount of silica particles may have a lower limit for silica coated sulfur-carbon composite comprising porous carbon material with higher specific surface areas which may be determined by BET according to ISO 9277:2010 as it is known by the skilled person in the art, for providing a silica coated sulfur-carbon composite with improved flowability. Thus, a silica coated sulfur-carbon composite which may fulfill the above formula 5B may have an improved balanced between good flowability and low density.

The sulfur-containing compounds may be supported on the porous carbon material may not be limited to a particular type and includes any type of carbon material that may be used as positive electrode active materials of lithium-sulfur batteries. The list of porous carbon material is listed below.

The sulfur-containing compound may be selected from the group consisting of sulfur ($S_8$), lithium polysulfide ($Li_2S_n$, $1 \le n \le 8$), carbon sulfur polymer ($(C_2S_x)_m$ ($2.5 \le x \le 50$, $2 \le m$) and a mixture of at least two thereof, but the sulfur-containing compound may not be limited thereto. Preferably, the sulfur-containing compound may be sulfur ($S_8$), that may be from an inorganic origin, and thus, may be inorganic sulfur ($S_8$).

The sulfur-carbon composite may comprise the porous carbon material and the sulfur-containing compound at a weight ratio of 1:9 to 1:1. For example, the weight ratio of the porous carbon material and the sulfur-containing compound in the sulfur-carbon composite may be 1:7 to 1:1.5, 1:5 to 1:2, 1:4 to 1:2.5, 1:3.5 to 1:2.7, 1:3.2 to 1:2.8, such as about 3. When the weight ratio of the porous carbon material and the sulfur-containing compound is in the above-described range, it is possible to reduce the resistance of the positive electrode active material layer and improve the battery performance, but the present invention is not limited thereto.

*Porous carbon material*

The porous carbon material may be made by carbonizing precursors of various carbon materials. In addition, the porous carbon material may include irregular pores, and the average diameter of the pores may be in the range of 1 to 200 nm, for example, 1 to 100 nm, 10 to 80 nm, or 20 to 50 nm. The average diameter of the pores may be equivalent to the average size of the pores. The average diameter of the pores may be determined according to ISO 15901:2019 as it is known by the person skilled in the art. However, determining the average diameter may not be limited thereto.

The shape of the porous carbon material may include, without limitation, any shape that is commonly used in positive electrodes of lithium-sulfur batteries, for example, a spherical shape, a rod shape, a scaly shape, a platy shape, a tubular shape or a bulk shape.

The porous carbon material may include, without limitation, any type of common carbon material having a porous structure. For example, the porous carbon material may be selected from the group consisting of at least one of graphene; carbon black such as denka black, acetylene black, ketjen black, channel black, furnace black, lamp black and summer black; carbon nanotubes (CNTs) such as single-walled carbon nanotubes (SWCNTs) and multi-walled carbon nanotubes (MWCNTs); carbon fiber such as graphite nanofiber (GNF), carbon nanofiber (CNF), and activated carbon fiber (ACF); and graphite such as natural graphite, artificial graphite, expandable graphite; or activated carbon; or a mixture of at least two thereof, but the porous carbon material may not be limited thereto.

The porous carbon material may have a specific surface between 300 and 2000 $m^2/g$, preferably between 400 and 1800 $m^2/g$, more preferably between 450 and 1500 $m^2/g$, even more preferably between 500 and 1200 $m^2/g$. The specific surface area may be determined by BET method according to ISO 15901:2019 as it is known by the person skilled in the art. However, determining the specific surface may not be limited thereto. A porous carbon material which may have a higher specific surface may have the effect that the density of the silica coated sulfur-carbon composite can be reduced and the electrochemical reaction of the sulfur-containing compound can be improved. However, a porous carbon material which may have a specific surface that is above the above named ranges may have inferior mechanical properties so that their use in an electrode, or lithium-sulfur battery, may not be suitable anymore. In case of use of carbon nanotubes as the porous carbon material, the specific surface area may also be determined by BET method according to ISO 15901:2019 and under the consideration of Peigney, Alain et al. "Specific surface area of carbon nanotubes and bundles of carbon nanotubes" (2001) Carbon, vol. 39 (n°4), pp. 507-514, ISSN 0008-6223) as it is known by the person skilled in the art. However, determining the specific surface area may not be limited thereto.

Additionally, the porosity (or referred to as void fraction) of the porous carbon material may be in the range of 10 to 90% of the total volume of the porous carbon material. The porosity of the porous carbon material may be determined according to ISO 15901:2019 as it is known by the person skilled in the art. However, determining the porosity of the porous carbon material may not be limited thereto. When the average pore size and porosity of the porous carbon material is in the above-described range, it is possible to improve the impregnation of the sulfur-containing compound and ensure the mechanical strength of the sulfur-carbon composite, allowing the use in the electrode fabrication process, but the present invention is not limited thereto.

The porous carbon material may provide the skeleton for uniformly and stably fixing the sulfur-containing compound which may be a positive electrode active material, and supplements the electrical conductivity of the sulfur-containing compound for smooth electrochemical reactions.

*Silica particles*

The silica particles of the present invention may be represented by the following formula 1: nanoparticles according to the following Formula 1:

[Formula 1]         $[SiO_2]_p[SiO(OH)_2]_{1-p}$

wherein p is a number of $0.0 < p \leq 1$. In an embodiment of the present disclosure, p may be $0.3 \leq p \leq 1$. In an embodiment of the present disclosure, p may be $0.5 \leq p \leq 1$. In an embodiment of the present disclosure, p may be $0.6 \leq p \leq 1$. In an embodiment of the present disclosure, p may be $0.7 \leq p \leq 1$. In an embodiment of the present disclosure, p may be $0.8 \leq p \leq 1$. In an embodiment of the present disclosure, p may be $0.9 \leq p \leq 1$. In another embodiment of the present disclosure, p may be 1. Hence, in other words, wherein p is a number of $0.0 < p \leq 1$, like p may be $0.3 \leq p \leq 1$, preferably, p may be $0.5 \leq p \leq 1$, especially preferably, p may be $0.6 \leq p \leq 1$, more preferably p may be $0.7 \leq p \leq 1$, especially more preferably p may be $0.8 \leq p \leq 1$, even more preferably p may be $0.9 \leq p \leq 1$. In a special embodiment of the present invention, p may be 1.

The silica particles coated on at least part of the surface of the sulfur-carbon composite may impart a hydroxyl group (-OH) to the surface of the sulfur-carbon composite through reaction with the surrounding moisture ($H_2O$). Hence, Formula 1 may vary depending on the amount of surrounding moisture. Accordingly, the sulfur-carbon composite coated with silica particles on at least part of the surface may have the reduced roughness and improved flowability due to the inserted silica particles, but the mechanism of the present disclosure is not limited thereto.

The average particle size $D_{50}$ of the silica particles coated on at least part of the surface of the sulfur-carbon composite may be, for example, 10 to 50 nm, preferably 10 to 40 nm, more preferably 15 to 40 nm. In another special embodiment the average particle size $D_{50}$ of the silica particles may be 10 to 15 nm. The average particle size may be determined by ISO 13320:2020 as it is known by the person skilled in the art. However, the measurement of the average particle size may not be limited thereto. When the average particle size $D_{50}$ of the silica particles satisfies the above-described range, it is possible to improve the coating uniformity of the silica particles and reduce the agglomeration of the sulfur-carbon composite. The use of the silica particles that as it is defined herein may have the effect that the flowability of a silica coated sulfur-carbon composite may be improved. The silica particles may have a higher density than the sulfur-containing compound or the porous carbon material. For having a silica coated sulfur-carbon composite with low density it may be desired to have a low amount of silica particles.

Silica particles which may be coated on a silica coated sulfur-carbon composite may form a silica layer, like a silica coating layer, which may partly, mostly, or fully coat a sulfur-carbon composite for obtaining a silica coated sulfur-carbon composite. Thus, the present invention may also include a silica coated sulfur-carbon composite, comprising: a sulfur-carbon composite; and a silica coating layer obtained from silica particles on at least part of a surface of the sulfur-carbon composite. Hence, it is known by the person skilled in the art that a silica a coating layer may be interchangeable with silica particles, in case the term silica particles is used in correlation with the silica coated sulfur-carbon composite.

In the present specification, the average particle size $D_{50}$ refers to the particle size at 50% of the cumulative particle size distribution. The particle size may be, for example, a value obtained by measuring the silica coated sulfur-carbon composite coated with silica particles through a particle size analyzer (PSA). A particle size analyzer for determining the average particle size $D_{50}$ may be used according to ISO 13320:2020 as it is known by the person skilled in the art. However, the method for measuring the particle size is not limited thereto.

*The method for the preparation of a silica coated sulfur-carbon composite*

According to another aspect of the present disclosure, there is provided a method for manufacturing the above-described silica coated sulfur-carbon composite.

Thus, one aspect may be a method for the preparation of a silica coated sulfur-carbon composite as described above comprising the steps of

a) providing a sulfur-carbon composite and silica particles

b) mixing the sulfur-carbon composite and the silica particles to coat the sulfur-carbon composite with the silica particles as solids in a powder mixing apparatus,

c) isolating the silica coated sulfur-carbon composite.

The method for the preparation of a silica coated sulfur-carbon composite has the surprising effect that it can be obtained from simple reactants, such as a sulfur-carbon composite and the silica particles so that a simple and efficient method can be provided. As a consequence, the method may be an inexpensive approach to obtain a silica coated sulfur-carbon composite with improved flowability.

Mixing the sulfur-carbon composite and the silica particles to coat the sulfur-carbon composite with the silica particles may be called coating step. Hence, the coating step may be performed by uniformly mixing the sulfur-carbon composite with the silica particles.

The mixing for the coating may be performed for the uniform distribution of the sulfur-carbon composite and the silica particles.

The mixing for the coating may be the mixing of the sulfur-carbon composite and the silica particles at a weight ratio of 99.9:0.1 to 80:20. For example, the sulfur-carbon composite and the silica particles may be mixed at a weight ratio of 99.9:0.1 to 90:10, or 99:1 to 90:10, or 99:1 to 95:5, or 97:3 to 90:10, or 99:1 to 97:3. When the mixing weight ratio of the sulfur-carbon composite and the silica particles is in the above-described range, it is possible to achieve the low density of the silica coated sulfur-carbon composite and improve the flowability, but the present disclosure is not limited thereto. Hence, the coating step may be performed by uniformly mixing the sulfur-carbon composite with the silica particles.

The coating step includes the step of mixing the sulfur-carbon composite with the silica particles in solid state. For example, the sulfur-carbon composite and the silica particles are in a powder phase, and the mixing in solid state may be performed by feeding the sulfur-carbon composite and the silica particles into a powder mixer.

Since the sulfur-carbon composite and the silica particles are mixed in solid state, any method for simple mixing of them may be used without limitation. In other words, the sulfur-carbon composite and the silica particles are mixed as solids in a powder mixing apparatus. The mixing as solids may have the effect that the sulfur-carbon composite is coated with silica particles. Hence, mixing the sulfur-carbon composite and the silica particles as solids may have the advantage that solvents may be avoided so that the components can be mixed ecologically friendly and efficiently.

The mixing for the coating may be performed by feeding the materials into a mixer such as a bead mill or an acoustic mixer.

The mixing for the coating may be performed, for example, for 60 seconds to 60 minutes while stirring at 1,000 rpm to 2,000 rpm in the mixer, to be specific, for 15 minutes to 60 minutes, or 15 minutes to 30 minutes, or 60 seconds to 30 minutes, or 30 minutes to 60 minutes while stirring at 1,300 rpm to 2,000 rpm or 1,400 rpm to 2,000 rpm or 1,500 rpm to 2,000 rpm, or 1,000 rpm to 1,500 rpm, to ensure uniformity of the silica coating.

In other words, the mixing for the coating may be performed, for example, for 60 seconds to 60 minutes, preferably for 15 minutes to 60 minutes, more preferably for 15 minutes to 30 minutes. In another embodiment the mixing for the coating may be performed for 60 seconds to 30 minutes, and yet in another embodiment for 30 minutes to 60 minutes.

The mixing for the coating may be performed, at 1,000 rpm to 2,000 rpm in the mixer, preferably at 1,300 rpm to 2,000 rpm, more preferably at 1,400 rpm to 2,000 rpm, even more preferably at 1,500 rpm to 2,000 rpm, or in another embodiment 1,000 rpm to 1,500 rpm, to ensure uniformity of the silica coating.

However, the mixing time may change depending on the amounts of the materials, and the present invention is not limited thereto.

The mixing for the coating may be performed, for example, at room temperature ($25 \pm 1°C$) to minimize the shape deformation of the sulfur-carbon composite and uniformly coat the silica particles, but the present invention is not limited thereto.

For details of the sulfur-carbon composite, the sulfur -containing compound, the porous carbon material and the silica particles, reference is made to the above description of the silica coated sulfur-carbon composite.

The method for manufacturing the silica coated sulfur-carbon composite may further include the step of manufacturing the sulfur-carbon composite before the step of coating the silica particles.

The step of manufacturing the sulfur-carbon composite may include the step of mixing the porous carbon material with the sulfur-containing compound.

The step of manufacturing the sulfur-carbon composite may include the step of mixing the porous carbon material with the sulfur-containing compound and molding them.

The mixing of the porous carbon material and the sulfur-containing compound may be performed using a mixer commonly used, and in this instance, the mixing time, temperature and speed may be selectively adjusted according to the amounts and conditions of the raw materials.

The step of molding the porous carbon material and the sulfur-containing compound mixed as described above may include heating their mixture. The heating is not limited to a particular temperature and may be performed at any temperature at which the sulfur-containing compound melts, and for example, 110°C to 180°C, to be specific, 115°C to 180°C.

*The electrode*

An additional aspect of the present invention is an electrode containing the silica coated sulfur-carbon composite as described above. Preferably, the electrode may be a positive electrode.

According to another aspect of the present invention, there is provided a positive electrode active material comprising the silica coated sulfur-carbon composite.

Preferably, the electrode may contain the porous carbon material wherein each porous carbon material may be confined by silica particles. Hence, the porous carbon material may originate from the silica coated sulfur-carbon composite. In one embodiment, the electrode may contain the silica coated sulfur-carbon composite which may contain the porous carbon material wherein each porous carbon material may be confined by silica particles. These silica particles may be a silica coating layer that is between the porous carbon material and/ or the sulfur-carbon composite. Whether a porous carbon material or the sulfur-carbon composite of the silica coated sulfur-carbon composite may be present in the electrode may depend on whether the electrode has been charged or discharged when used in a lithium-sulfur battery.

The distance of two opposite sides on a cut surface of a porous carbon material confined by silica may be 100 $\mu$m or less. Preferably, the distance of two opposite sides on a cut surface of a porous carbon material may be the average distance of two opposite sides on a cut surface of a porous carbon material. The distance and/ or the average distance of two opposite sides on a cut surface of a porous carbon material may correlate, preferably may be about the same, as the average particle size of the porous carbon material which may have been used for the manufacture of the electrode.

The silica coated sulfur-carbon composite itself may be used as the positive electrode active material.

The silica coated sulfur-carbon composite may be used as the positive electrode active material together with the sulfur-containing compound where necessary.

The electrode may comprise a current collector; and an electrode active material layer comprising a plurality of silica coated sulfur-carbon composites on at least one surface of the current collector.

The electrode may be used as at least one of a negative electrode or a positive electrode for use in lithium secondary batteries. For example, the electrode may be used as a positive electrode for use in lithium-sulfur batteries, but the use of the present invention is not limited thereto.

Thus, an electrode containing the silica coated sulfur-carbon composite may be used as the positive electrode active material in a lithium-sulfur battery. An electrode containing the silica coated sulfur-carbon composite may be used as the positive electrode active material together with a sulfur-containing compound in a lithium-sulfur battery.

*The lithium-sulfur battery*

In another aspect of the present invention a lithium-sulfur battery comprising the silica coated sulfur-carbon composite is provided.

Hence, one aspect is a lithium-sulfur battery, comprising:

a positive electrode comprising the silica coated sulfur-carbon composite as described above;
a negative electrode comprising a negative electrode active material; and
an electrolyte solution.

A lithium-sulfur battery comprising the silica coated sulfur-carbon composite as described in the present invention may have improved performance. A lithium-sulfur battery comprising the silica coated sulfur composite as described in the present invention may have improved capacity. Thus, a lithium-sulfur battery according to the present invention may have improved performance and capacity. Without being bound by any theory, the improved performance and capacity may be achieved through the silica coated sulfur-carbon composite as it is described in the present invention which may be a part of a positive electrode, since the silica coated sulfur-carbon composite has an improved distribution of the silica coated sulfur-carbon composite in the positive electrode. Furthermore, the formation of agglomerates of the silica coated sulfur-carbon composite in the positive electrode may be minimized. The improved distribution and minimization of defect formation may be because of the improved flowability of the silica coated sulfur-carbon composite. Hence, the silica coated sulfur-carbon composite may result in a lithium-sulfur battery that has improved performance and/ or improved capacity. The improvements may be measured by comparing a lithium-sulfur battery containing the silica coated sulfur-carbon composite as described above, to a lithium-sulfur battery containing the sulfur-carbon composite without coating with silica particles. A variety of benchmark tests for testing the performance and capacity of lithium-sulfur batteries, or electrodes, like positive electrodes, may be known by the person skilled in the art, that may present the benefits of the silica coated sulfur-carbon composite over a sulfur-carbon composite without coating with silica particles.

The silica coated sulfur-carbon composite may be included as a carrier for supporting a positive electrode active material of a positive electrode, a positive electrode active material itself, or a conductive material.

The positive electrode, the negative electrode, the positive electrode active material, the negative electrode active material, and the electrolyte solution may include, without limitation, those used in lithium-sulfur batteries without departing from the present invention.

For example, the positive electrode may comprise a positive electrode current collector and a positive electrode active material layer coated on one or two surfaces of the positive electrode current collector, and the negative electrode may comprise a negative electrode current collector and a negative electrode active material layer coated on one or two surfaces of the negative electrode current collector.

In this instance, the positive electrode current collector may include any type of material that supports the positive electrode active material and is highly conductive without causing chemical changes in the corresponding battery, and the negative electrode current collector may include any type of material that supports the negative electrode active material, and is highly conductive without causing chemical changes in the corresponding battery.

The negative electrode active material may include, without limitation, any type of material that can reversibly intercalate or deintercalate lithium ($Li^+$), or react with lithium ions to reversibly form a lithium-containing compound. For example, the negative electrode active material may include at least one of lithium metal or a lithium alloy. The lithium alloy may be, for example, an alloy of lithium (Li) and at least one of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) or tin (Sn).

The electrolyte solution may include, without limitation, any type of electrolyte solution that may be used in lithium-sulfur batteries, and the electrolyte solution may comprise, for example, a lithium salt and a solvent. The solvent may include, for example, at least one of an ether-based compound or a carbonate-based compound, but is not limited thereto. In addition, the lithium salt includes any type of lithium salt that may be used in electrolyte solutions for lithium-sulfur batteries, and for example, at least one of $LiSCN$, $LiBr$, $LiI$, $LiPF_6$, $LiBF_4$, $LiB_{10}Cl_{10}$, $LiSO_3CF_3$, $LiCl$, $LiClO_4$, $LiSO_3CH_3$, $LiB(Ph)_4$, $LiC(SO_2CF_3)_3$, $LiN(SO_2CF_3)_2$, $LiCF_3CO_2$, $LiAsF_6$, $LiSbF_6$, $LiAlCl_4$, $LiFSI$, chloroborane lithium or lower aliphatic lithium carboxylate, but is not limited thereto.

The lithium-sulfur battery may further comprise a separator interposed between the positive electrode and the negative electrode. The separator separates or insulates the positive electrode from the negative electrode, and may be made of a porous non-conductive or insulating material to transport lithium ions between the positive electrode and the negative electrode. The separator may be an independent member such as a film, or may be a coating layer added to the positive electrode and/or the negative electrode.

The material of the separator may include, for example, at least one of polyolefin such as polyethylene and polypropylene, a glass fiber filter paper or a silica material, but is not limited thereto.

Accordingly, one special embodiment may be a lithium-sulfur battery, comprising:

a positive electrode comprising: a positive electrode current collector, and a positive electrode active material layer, wherein the positive electrode active material layer may be coated on 1 or 2 surfaces of the positive electrode current collector with the silica coated sulfur-carbon composite as described above;

a negative electrode comprising a negative active material which may include, without limitation, any type of material that can result reversibly intercalate or deintercalate lithium; and an electrolyte solution which may include without limitation any type of electrolyte solution that may comprise a lithium salt and a solvent as described above.

The shape of the lithium-sulfur battery is not limited to a particular shape, and may come in various shapes such as a cylindrical shape, a stack shape and a coin shape.

The method for manufacturing the lithium-sulfur battery may use a winding process commonly used to fabricate electrodes as well as a lamination and stacking process or a folding process of the separator and the electrode, but is not limited thereto.

_Use of the silica coated sulfur-carbon composite_

An aspect of the present invention is the use of a silica coated sulfur-carbon composite as described above for the preparation of a positive electrode of a lithium-sulfur battery.

The silica coated sulfur-carbon composite comprises the sulfur-carbon composite with reduced agglomeration by the silica-coating on at least part of the surface, thereby improving the flowability. In other words, the silica coated sulfur-carbon composite minimizes the formation of agglomerates and improves the flowability. Hence, the preparation of a positive electrode may be more efficient by the use of a silica coated sulfur-carbon composite as described above, since the uniformity of the positive electrode, and thus also of the lithium-sulfur battery, can be improved, and the formation of defects in the manufacture of the positive electrode, and thus also of the lithium-sulfur battery, may be minimized. Consequently, the production yield of the positive electrode, and thus also of the lithium-sulfur battery, may be improved. Furthermore, due to the higher flowability of the silica coated sulfur-carbon composite, the manufacture of a positive electrode, and thus also of the lithium-sulfur battery, may be maximized per time unit.

According to another aspect of the present invention, there is provided a method for improving the flowability of the silica coated sulfur-carbon composite.

The method for improving the flowability of the silica coated sulfur-carbon composite includes the step of coating the silica particles on at least part of the surface of the sulfur-carbon composite.

For details of the step of coating the silica particles on at least part of the surface of the sulfur-carbon composite, reference is made to the above description for the method for manufacturing the silica coated sulfur-carbon composite.

Specifically, when a conventional sulfur-carbon composite having high surface roughness is compared to a silica coated sulfur-carbon composite according to an embodiment of the present invention includes silica particles coated on at least part of the surface of the sulfur-carbon composite, so the silica particles are inserted into the surface of the sulfur-carbon composite having high surface roughness, thereby reducing the surface roughness of the sulfur-carbon composite and providing good particle flowability to the sulfur-carbon composite. The surface roughness may be measured as it is described above.

Accordingly, the silica coated sulfur-carbon composite according to an embodiment of the present invention is uniformly coated on the electrode support, thereby allowing to manufacture an electrode with uniform loading and/ or with minimized defects.

## Experiments

Hereinafter, the present invention will be described in more detail through examples, but the following examples are for illustrative purposes only, and the scope of the present invention is not limited thereto.

**Experimental example 1. Manufacture of silica coated sulfur-carbon composite**

Example 1

99 parts by weight of sulfur ($S_8$)-carbon (CNT) composite (sulfur ($S_8$) raw material: H sulfur corp., carbon (CNT) raw material: Nano C corp, $S_8$ 70 wt%, CNT 30 wt%) and 1 part by weight of silica particles ($[SiO_2]_x[SiO(OH)_2]_{1-x}$, $0.5 \leq x \leq 1$, $D_{50}$ 15 nm) are put into a mixer (Henschel mixer), and uniformly mixed at 1,500 rpm, room temperature for 30 minutes to manufacture a silica coated sulfur-carbon composite with silica particles coated on at least part of the surface of the sulfur-carbon composite.

In this instance, the coating thickness of the silica particles is 40 nm to 5 $\mu$m (2.5 $\mu$m on average).

Example 2

A silica coated sulfur-carbon composite is manufactured by the same method as Example 1, except that 97 parts by weight of the sulfur-carbon composite and 3 parts by weight of the silica particles ($[SiO_2]_x[SiO(OH)_2]_{1-x}$, $0.5 \leq x \leq 1$, $D_{50}$ 15 nm) are mixed.

Example 3

A silica coated sulfur-carbon composite is manufactured by the same method as Example 1, except that 90 parts by weight of the sulfur-carbon composite and 10 parts by weight of the silica particles ($[SiO_2]_x[SiO(OH)_2]_{1-x}$, $0.5 \leq x \leq 1$, $D_{50}$ 15 nm) are mixed.

Comparative Example 1

The sulfur-carbon composite itself used in Example 1 is prepared for Comparative Example 1 without the step of mixing silica particles with the sulfur-carbon composite to coat the silica particles on at least part of the surface of the sulfur-carbon composite.

[Measurement of average particle size $D_{50}$ of silica particles]

The average particle size $D_{50}$ of the silica particles is measured by a particle size at 50% of the cumulative particle size distribution using a particle size analyzer (PSA).

[Measurement of coating thickness of silica particles]

The coating thickness of the silica particles is measured through a scanning electron microscope (SEM).

[Determination of structure of silica coated sulfur-carbon composite]

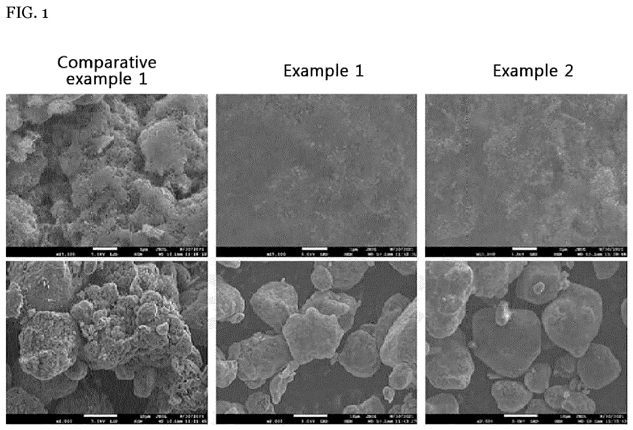

To determine the structures of the silica coated sulfur-carbon composites according to Examples 1 and 2 and the sulfur-carbon composite according to Comparative Example 1, the observation results using a scanning electron microscope (SEM, available from JEOL Ltd.) are shown in FIG. 1.

In FIG. 1, an image at 15k magnification is at the upper part, and an image at 2k magnification is at the lower part.

According to FIG. 1, it is found that the sulfur-carbon composite according to Comparative Example 1 without silica particle coating has a rough surface due to the porosity of the sulfur-carbon composite, while in Examples 1 and 2, the silica particles are coated on the surface of the sulfur-carbon composite to form a smooth surface. Among the silica coated sulfur-carbon composites according to Examples 1 and 2, it is found that the surface of Example 2 with a larger coating amount of silica particles is smoother.

[Determination of flowability of silica coated sulfur-carbon composites]

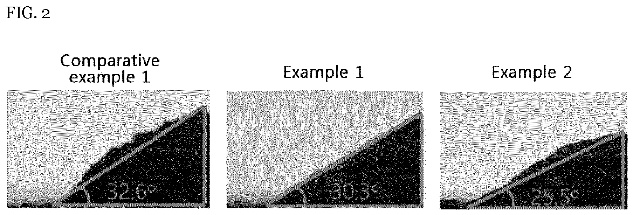

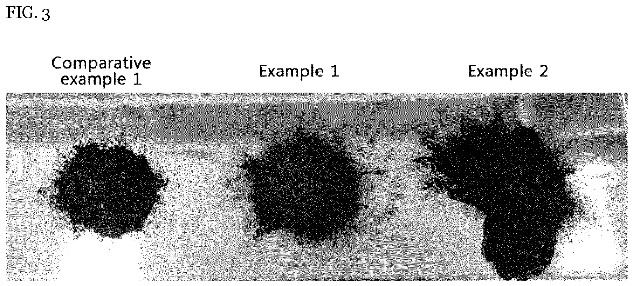

To determine the flowability of the silica coated sulfur-carbon composites according to Examples 1, 2 and 3 and Comparative Example 1, the angle of repose is measured according to the following angle of repose test, and the results are shown in Table 1 and FIGS. 2 and 3 below. First, a funnel is placed at the height of 7.5 cm from the ground, and fixed with the center aligned using a horizontal leveler, and the lower portion of the funnel is closed to prevent the fed sample from sliding down. 100 g of the sample to be measured is poured into the funnel, the lower portion of the funnel is opened to cause the sample to fall freely into a pile on a disk (diameter 13 cm) on the base. Subsequently, the angle of repose ($\theta$) of the sample pile is measured.

The results also present the result of the sulfur-carbon composite according to Comparative Example 1 without silica particle coating.

$$\text{Change in angle of repose (\%)} = [(Ra-Rb)/Rb] \times 100$$

Rb is the angle of repose of the sulfur-carbon composite before coating, and

Ra is the angle of repose of the silica coated sulfur-carbon composite.

[Table 1]

| Classification | Comparative Example 1 | Example 1 | Example 2 | Example 3 |
|---|---|---|---|---|
| Angle of Repose (°) | 32.6 | 30.3 | 25.5 | 23 |
| Change in angle of repose | 0 | -7% | - 22% | -30% |

According to Table 1 and FIGS. 2 and 3, it is found that the angle of repose of the silica coated sulfur-carbon composite according to Examples 1 to 3 with silica coating is lower than Comparative Example 1, showing that flowability is improved.

In particular, according to the results of Table 1, it is found that according to Examples 2 and 3 with larger amounts of silica particles, the angle of repose is lower.

**Experimental example 2. Manufacture of zinc oxide (ZnO) coated sulfur-carbon composite**

For comparative evaluation, to determine if ceramic particles used to coat a sulfur-carbon composite reduce the agglomeration of the sulfur-carbon composite and improve flowability, the following experiments using zinc oxide (ZnO) are conducted.

Comparative Example 2

For the experimental example 2, sulfur ($S_8$)-carbon (CNT) composite (sulfur ($S_8$) raw material: H sulfur corp., carbon (CNT) raw material: Nano C corp, $S_8$ 75 wt%, CNT 25 wt%) is prepared.

Comparative Example 3

99 parts by weight of the sulfur-carbon composite prepared in Comparative Example 2 and 1 part by weight of zinc oxide (ZnO, Sigma Aldrich) are put into a mixer (Henschel mixer) and uniformly mixed at 1,500 rpm, room temperature for 30 minutes to manufacture a sulfur-carbon composite with zinc oxide coated on at least part of the surface of the sulfur-carbon composite.

Comparative Example 4

A sulfur-carbon composite coated with zinc oxide is manufactured by the same method as Comparative Example 3, except that 95 parts by weight of the sulfur-carbon composite and 5 parts by weight of ZnO are mixed.

[Determination of structure of zinc oxide coated sulfur-carbon composite]

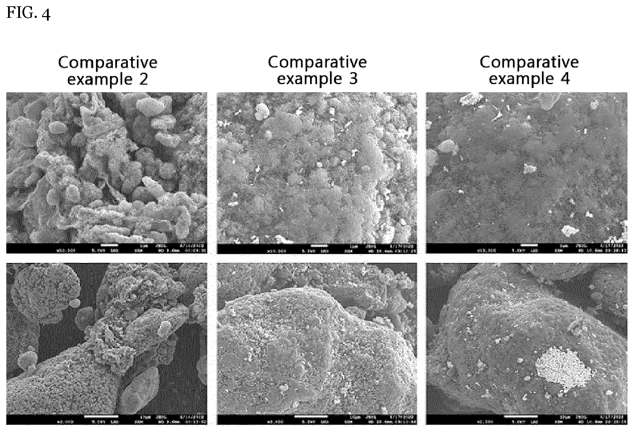

To determine the structures of the sulfur-carbon composites according to Comparative Examples 2 to 4, the observation results using a scanning electron microscope (SEM, Jeol) are shown in FIG. 4.

In FIG. 4, an image at 10k magnification is at the upper part and an image at 2k magnification is at the lower part.

According to FIG. 4, it is found that the sulfur-carbon composite according to Comparative Example 2 without zinc oxide coating has a rough surface due to the porosity of the sulfur-carbon composite. In the case of Comparative Examples 3 and 4, it is found that some of zinc oxide is inserted into the surface of the sulfur-carbon composite due to the mixing with zinc oxide, but it is observed that zinc oxide is not uniformly coated on the surface and the majority of zinc oxide agglomerates and sticks together.

It is observed that the surface roughness of Comparative Examples 3 and 4 is reduced to some extent compared to Comparative Example 2, but how much the surface roughness is reduced compared to Comparative Example 2 is not significant.

[Determination of flowability of zinc oxide coated sulfur-carbon composite]

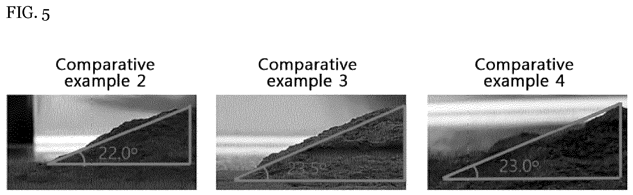

To determine the flowability of the sulfur-carbon composite according to Comparative Examples 2 to **4,** the angle of repose is measured by the same method as the experimental example 1 and the results are shown in the following Table 2 and FIG. 5.

[Table 2]

| Classification | Comparative Example 2 | Comparative Example 3 | Comparative Example 4 |
|---|---|---|---|
| Angle of repose(°) | 22.0 | 23.5 | 23.0 |
| Change in angle of repose (%) | 0 | + 6.8% | + 4.5% |

According to the results of Table 2 and FIG. 5, as opposed to silica particles, it is found that zinc oxide does not reduce the agglomeration on the surface of the sulfur-carbon composite and improve the flowability, and rather, zinc oxide makes the agglomeration of the sulfur-carbon composite worse. Additionally, it is found that zinc oxide has no influence on the reduction of agglomeration of the sulfur-carbon composite at varying amounts of zinc oxide.

**Claims**

1.  A silica coated sulfur-carbon composite, comprising:

    a sulfur-carbon composite; and
    silica particles coated on at least part of a surface of the sulfur-carbon composite;
    wherein the weight ratio of sulfur-carbon composite to silica particles is between 99.9:0.1 and 80:20;
    the sulfur-carbon composite contains an outer surface and a specific surface,
    wherein between 60% and 100% of the outer surface of the sulfur-carbon composite is coated with silica particles; and
    the silica coated sulfur-carbon composite has features of the following Formula 2:

    [Formula 2]

    $$0.0001 \leq \frac{[Mp/(Mp + Mc)]}{[So/St)]} \leq 0.2$$

    where Mp is a mass of the silica particles,
    Mc is a mass of the sulfur-carbon composite,
    So is a coating area of the silica particles, and
    St is a surface area of the silica coated sulfur-carbon composite.

2.  The silica coated sulfur-carbon composite according to claim 1,
    wherein the sulfur-carbon composite comprises a porous carbon material; and a sulfurcontaining compound.

3.  The silica coated sulfur-carbon composite according to claim 2, wherein the sulfurcarbon composite comprises a porous carbon material; and a sulfur-containing compound supported on at least part of inner and outer surfaces of pores in the porous carbon material, wherein the ratio of the porous carbon material and the silica particles is between 35:1 and 2:1, preferably from 30:1 to 2.5:1.

4.  The silica coated sulfur-carbon composite according to one of the preceding claims, wherein the angle of repose ($\theta$) of the silica coated sulfur-carbon composite is equal to or less than 32°.

5.  A method for the preparation of a silica coated sulfur-carbon composite according to claims 1 to 4 comprising the steps of

    a) providing a sulfur-carbon composite and silica particles
    b) mixing the sulfur-carbon composite and the silica particles to coat the sulfur-carbon composite with the silica particles as solids in a powder mixing apparatus,
    c) isolating the silica coated sulfur-carbon composite.

6.  An electrode containing the silica coated sulfur-carbon composite according to claims 1 to 4.

7. The electrode according to claim 6, wherein the electrode contains a porous carbon material wherein each porous carbon material is confined by silica.

8. The electrode according to claims 6 to 7, wherein the distance of two opposite sides on a cut surface of a porous carbon material confined by silica is 100 $\mu$m or less.

9. A lithium-sulfur battery, comprising:

a positive electrode comprising the silica coated sulfur-carbon composite according to any one of claims 1 to 4;
a negative electrode comprising a negative electrode active material; and an electrolyte solution.

**Patentansprüche**

1. Siliciumdioxid-beschichteter Schwefel-Kohlenstoff-Verbundstoff, umfassend:

einen Schwefel-Kohlenstoff-Verbundstoff; und
Siliciumdioxidpartikel, die auf mindestens einen Teil einer Oberfläche des Schwefel-Kohlenstoff-Verbundstoffs beschichtet sind;
wobei das Gewichtsverhältnis von Schwefel-Kohlenstoff-Verbundstoff zu Siliciumdioxidpartikeln zwischen 99,9:0,1 und 80:20 liegt;
der Schwefel-Kohlenstoff-Verbundstoff eine äußere Oberfläche und eine spezifische Oberfläche enthält, wobei zwischen 60 % und 100 % der äußeren Oberfläche des Schwefel-Kohlenstoff-Verbundstoffs mit Siliciumdioxidpartikeln beschichtet sind; und
der Siliciumdioxid-beschichtete Schwefel-Kohlenstoff- Verbundstoff Merkmale der folgenden Formel 2 aufweist:

[Formel 2]

$$0.0001 \leq \frac{[Mp/(Mp + Mc)]}{[So/St)]} \leq 0.2$$

wobei Mp eine Masse der Siliciumdioxidpartikel ist,
Mc eine Masse des Schwefel-Kohlenstoff-Verbundstoffs ist,
So ein Beschichtungsbereich der Siliciumdioxidpartikel ist, und
St ein Oberflächenbereich des Siliciumdioxid-beschichteten Schwefel-Kohlenstoff-Verbundstoffs ist.

2. Siliciumdioxid-beschichteter Schwefel-Kohlenstoff-Verbundstoff nach Anspruch 1, wobei der Schwefel-Kohlenstoff-Verbundstoff ein poröses Kohlenstoffmaterial und eine schwefelhaltige Verbindung umfasst.

3. Siliciumdioxid-beschichteter Schwefel-Kohlenstoff-Verbundstoff nach Anspruch 2, wobei der Schwefel-Kohlenstoff-Verbundstoff ein poröses Kohlenstoffmaterial und eine schwefelhaltige Verbindung, die auf mindestens einem Teil der inneren und äußeren Oberflächen von Poren in dem porösen Kohlenstoffmaterial getragen wird, umfasst, wobei das Verhältnis des porösen Kohlenstoffmaterials und der Siliciumdioxidpartikel zwischen 35:1 und 2:1, vorzugsweise von 30:1 bis 2,5:1, liegt.

4. Siliciumdioxid-beschichteter Schwefel-Kohlenstoff-Verbundstoff nach einem der vorhergehenden Ansprüche, wobei der Reaktionswinkel ($\theta$) des Siliciumdioxid-beschichteten Schwefel-Kohlenstoff-Verbundstoffs gleich oder kleiner als 32° ist.

5. Verfahren zur Herstellung eines Siliciumdioxid-beschichteten Schwefel-Kohlenstoff-Verbundstoffs nach den Ansprüchen 1 bis 4, umfassend die Schritte

a) Bereitstellen eines Schwefel-Kohlenstoff-Verbundstoffs und von Siliciumdioxidpartikeln
b) Mischen des Schwefel-Kohlenstoff-Verbundstoffs und der Siliciumdioxidpartikel, um den Schwefel-Kohlenstoff-Verbundstoff mit den Siliciumdioxidpartikeln als Feststoffe in einer Pulvermischvorrichtung zu beschichten,
c) Isolieren des Siliciumdioxid-beschichteten Schwefel-Kohlenstoff- Verbundstoffs.

6. Elektrode, enthaltend den Siliciumdioxid-beschichteten Schwefel-Kohlenstoff-Verbundstoff nach den Ansprüchen 1 bis 4.

7. Elektrode nach Anspruch 6, wobei die Elektrode ein poröses Kohlenstoffmaterial enthält, wobei jedes poröse Kohlenstoffmaterial durch Siliciumdioxid eingeschlossen ist.

8. Elektrode nach den Ansprüchen 6 bis 7, wobei der Abstand von zwei gegenüberliegenden Seiten auf einer Schnittfläche eines porösen Kohlenstoffmaterials, das durch Siliciumdioxid eingeschlossen ist, 100 $\mu$m oder weniger beträgt.

9. Lithium-Schwefel-Batterie, umfassend:

   eine positive Elektrode, umfassend den Siliciumdioxid-beschichteten Schwefel-Kohlenstoff-Verbundstoff nach einem der Ansprüche 1 bis 4;
   eine negative Elektrode, umfassend ein aktives Material der negativen Elektrode; und eine Elektrolytlösung.

**Revendications**

1. Composite de soufre-carbone revêtu de silice, comprenant :

   un composite de soufre-carbone ; et
   des particules de silice revêtues sur au moins une partie d'une surface du composite de soufre-carbone ;
   dans lequel le rapport en poids du composite de soufre-carbone et des particules de silice est entre 99,9:0,1 et 80:20 ;
   le composite de soufre-carbone contient une surface extérieure et une surface spécifique,
   dans lequel entre 60 % et 100 % de la surface extérieure du composite de soufre-carbone sont revêtus de particules de silice ; et
   le composite de soufre-carbone revêtu de silice a les caractéristiques de la Formule 2 ci-après :

   [Formule 2]

   $$0,0001 \leq \frac{[Mp/(Mp + Mc)]}{[So/St]} \leq 0,2$$

   où Mp est une masse des particules de silice,
   Mc est une masse du composite de soufre-carbone,
   So est une zone de revêtement des particules de silice, et
   St est une zone de surface du composite de soufre-carbone revêtu de silice.

2. Composite de soufre-carbone revêtu de silice selon la revendication 1,
   dans lequel le composite de soufre-carbone comprend un matériau de carbone poreux ; et un composé contenant du soufre.

3. Composite de soufre-carbone revêtu de silice selon la revendication 2, dans lequel le composite de soufre-carbone comprend un matériau de carbone poreux ; et un composé contenant du soufre supporté sur au moins une partie des surfaces de pores intérieure et extérieure dans le matériau de carbone poreux, dans lequel le rapport du matériau de carbone poreux et des particules de silice est entre 35:1 et 2:1, de préférence de 30:1 à 2,5:1.

4. Composite de soufre-carbone revêtu de silice selon l'une quelconque des revendications précédentes,
   dans lequel l'angle de talus ($\theta$) du composite de soufre-carbone revêtu de silice est égal ou inférieur à 32°.

5. Procédé de préparation d'un composite de soufre-carbone revêtu de silice selon les revendications 1 à 4 comprenant les étapes consistant à

   a) fournir un composite de soufre-carbone et des particules de silice

b) mélanger le composite de soufre-carbone et les particules de silice pour revêtir le composite de soufre-carbone avec les particules de silice en tant que solides dans un appareil de mélange de poudre,
c) isoler le composite de soufre-carbone revêtu de silice.

6. Électrode contenant le composite de soufre-carbone revêtu de silice selon les revendications 1 à 4.

7. Électrode selon la revendication 6, dans lequel l'électrode contient un matériau de carbone poreux dans lequel chaque matériau de carbone poreux est confiné par de la silice.

8. Électrode selon les revendications 6 à 7, dans lequel la distance de deux côtés opposés sur une surface coupée d'un matériau de carbone poreux confiné par de la silice est égale ou inférieure à 100 $\mu$m.

9. Batterie au lithium-soufre, comprenant :

une électrode positive comprenant le composite de soufre-carbone revêtu de silice selon l'une quelconque des revendications 1 à 4 ;
une électrode négative comprenant un matériau actif d'électrode négative ; et une solution électrolytique.

FIG. 1

Comparative
example 1

Example 1

Example 2

FIG. 2

Comparative example 1     Example 1     Example 2

FIG. 3

Comparative example 1      Example 1      Example 2

FIG. 4

| Comparative example 2 | Comparative example 3 | Comparative example 4 |

FIG. 5

Comparative example 2     Comparative example 3     Comparative example 4

**REFERENCES CITED IN THE DESCRIPTION**

**Patent documents cited in the description**

- CN 107768617 A

**Non-patent literature cited in the description**

- **PEIGNEY, ALAIN et al.** Specific surface area of carbon nanotubes and bundles of carbon nanotubes. *Carbon*, 2001, vol. 39 (4), ISSN 0008-6223, 507-514